Europäisches Patentamt

European Patent Office

Office européen des brevets

(11) Publication number: **0 183 270**
**B1**

(12) **EUROPEAN PATENT SPECIFICATION**

(45) Date of publication of patent specification: **08.08.90**

(21) Application number: **85115140.7**

(22) Date of filing: **29.11.85**

(51) Int. Cl.⁵: **G 01 N 21/57**

(54) Method of determining glossinesses of surface of body.

(30) Priority: **30.11.84 JP 253529/84**
**30.11.84 JP 253530/84**
**27.11.85 JP 266638/85**

(43) Date of publication of application:
**04.06.86 Bulletin 86/23**

(45) Publication of the grant of the patent:
**08.08.90 Bulletin 90/32**

(84) Designated Contracting States:
**DE FR GB**

(56) References cited:
**WO-A-84/00213**
**DE-U-1 944 088**
**GB-A-2 123 139**
**US-A-4 124 803**

The file contains technical information
submitted after the application was filed and
not included in this specification

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **Asano, Yuichiro Research**
**Laboratories**
**Kawasaki Steel Corporation 1, Kawasaki-cho**
**Chiba-shi Chiba 260 (JP)**
Inventor: **Shibata, Yoshiaki Research**
**Laboratories**
**Kawasaki Steel Corporation 1, Kawasaki-cho**
**Chiba-shi Chiba 260 (JP)**
Inventor: **Shiozumi, Motoji Hanshin Works**
**Kawasaki Steel Corp. 2-88,**
**Wakinohamakaigandori**
**Chuo-ku Kobe-shi Hyogo 651 (JP)**
Inventor: **Aizawa, Hitoshi Hanshin Works**
**Kawasaki Steel Corp. 2-88,**
**Wakinohamakaigandori**
**Chuo-ku Kobe-shi Hyogo 651 (JP)**

(74) Representative: **Patentanwälte Grünecker,**
**Kinkeldey, Stockmair & Partner**
**Maximilianstrasse 58**
**D-8000 München 22 (DE)**

**Description**

This invention relates to a method of determining the glossiness grade of a surface of a sample body by directing onto the surface to be measured first and second light fluxes at angles of θ1 and θ2 respectively, and measuring the specular reflection intensities I1 and I2 of said first and second light fluxes respectively, and determining said glossiness in terms of glossiness grades being classified in accordance with the light reflection intensity distribution at said surface. The invention is especially suitable for use in measuring the surface quality of a steel sheath to control same, wherein the glossiness already based on visual inspection are classified and graded in accordance with the light reflection intensity distribution of the surface of the sample body.

A method similar to the above type is disclosed in DE—U 1 944 088. This method directs onto the surface to be measured first and second light fluxes at angles θ1 and θ2, respectively, and measuring the specular reflection intensities I1 and I2 of said first and second light fluxes, respectively, and determining said glossiness in terms of glossiness grades being classified in accordance with the light reflection intensity distribution at said surface.

The disadvantage of the above method is that the grade of glossiness for objects having colors identical to one another but may be different in luminosity from one another are not accurately determined. In order to accurately determine the glossiness of an object the degree of roughness of the surface of the object must also be considered.

Other methods include: a method of measuring by the specular surface glossiness wherein the specular reflection intensity of a white light flux projected at a predetermined angle is measured; a method of measuring by the contrasting glossiness, wherein a ratio between the main reflection intensity and the scattered reflection intensity of a white light projected at a predetermined angle is used (JIS Z8741).

The method of measuring by the specular surface glossiness is widely used in industries, but, present such a disadvantage that, as for the specular surface object having a low surface roughness, the results of measurement do not coincide with the actual facts. Furthermore, the method of measuring by the contrasting glossiness is accurate for objects which are different in color from one another, but is less accurate with objects having nearly a specular surface.

It is an object of the present invention to provide a method of determining glossiness of a surface of a body, wherein, with objects being identical in color with one another (may be different in luminosity from one another), the results of measurement coincide with the grade of glossiness already classified through visual inspection and the degree of glossiness can be determined quantitatively over a wide range of roughness degree from the specular surface to the rough surface.

Another object of the present invention is to replace the determination of the grade of glossiness of a surface of a body under the conventional visual inspection by the above-mentioned method which determines the glossiness automatically.

According to the invention this will be achieved by the methods as claimed in claims 1 and 5.

According to the present invention, with the objects having colors identical with one another (may be different in luminosity from one another), the glossiness coinciding with the visible glossiness and widely ranging in roughness degree from the specular surface to the roughness surface can be quantitatively determined. In consequence, it becomes possible to accurately measure and control the surface qualities at on-line, so that outstanding practical advantages such as the prevention of the occurrence of defectives can be offered.

A specific form of the present invention is of such an arrangement that centroid points of the respective visible glossiness are selected as the representative points, so that the adequate representative points can be easily obtained.

Another specific form of the present invention is of such an arrangement that the curve 1 is determined by a construction in a drawing so that the adequate curve 1 can be easily obtained.

A further specific form of the present invention is of such an arrangement that the straight lines m are obtained by plotting a multiplicity of sample points, whereby the number of points turned to be mistakenly determined can be limited to the minimum for the adjoining groups, so that adequate straight line m can be easily obtained.

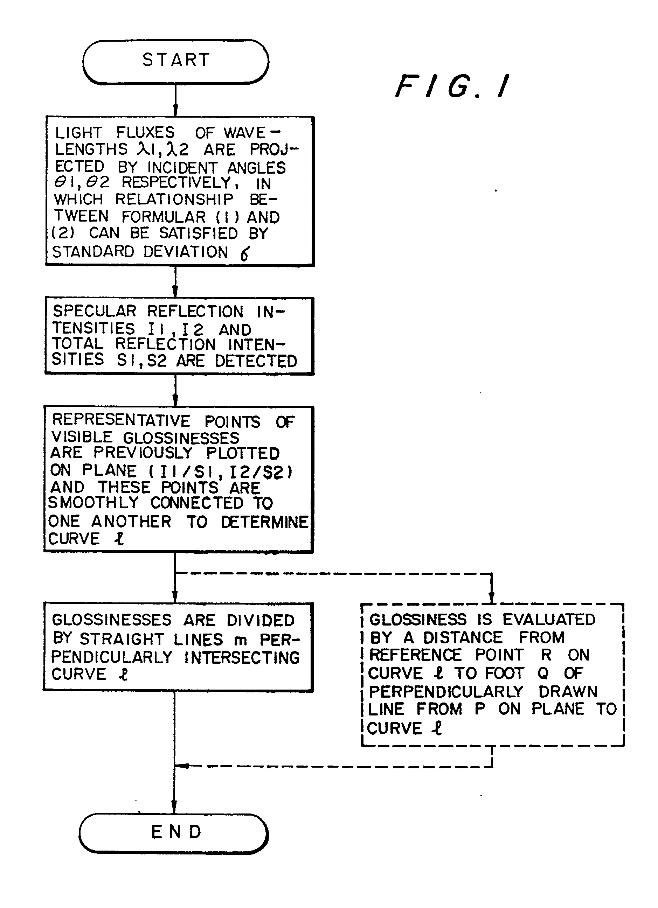

As indicated by broken lines in Fig. 1, to the above end, the present invention contemplates that, further, the glossiness of an arbitrary work to be measured is evaluated by a distance from a reference point R on the curve 1 along the curve 1 to a foot Q of a perpendicularly drawn line from a point P on the two dimensional plane of the work to be measured to the curve 1.

A still further specific form of the present invention is of such an arrangement that the glossiness of an arbitrary point on the curve 1 is determined to be a proportionally interpolated value along the curve 1 in each of section, and the glossiness of an arbitrary sample is made to be the glossiness of a point at which is positioned a foot Q of a perpendicularly drawn line from a point P associated with the sample on the two dimensional plane to the curve 1, so that the glossiness of the arbitrary sample can be quantitatively obtained.

A yet further specific form of the present invention is of such an arrangement that the boundary line Z is determined such that, when two dimensional distributions of adjoining groups are projected on an axis Zv normal to the boundary line Z, the overlapping formed there comes to be the minimum, so that the

2

EP 0 183 270 B1

adequate boundary line Z can be easily obtained.

A specific form of the apparatus used in the present invention is of such an arrangement that the light receiver comprises photodiodes arranged in a two dimensional array form, so that the specular and total reflection intensities can be detected easily with no movable parts.

Another specific form of the apparatus used in the present invention is of such an arrangement that the light receiver has an aperture provided in front thereof and the opening area of the aperture is made variable, so that the specular and total reflection intensities can be detected easily.

The present invention is based on the fact that the visible glossiness of a surface of a body such as a steel sheet rely upon two parameters of surface roughness namely the average roughness and the average interval between crests, and evaluation cannot be performed only by the averaged roughness.

More specifically, the surface roughness is the main factor in determining the glossiness of objects having colors substantially identical with each other, and it is basically considered that, when information of the surface roughness is accurately grasped, the glossiness can be evaluated.

Generally speaking, the information of the surface roughness can be expressed by the standard deviation $\sigma$ of the height distribution of the profile of the surface to be measured and an auto-correlation distance T (a distance, where an auto-correlation function becomes l/e), the value of the surface roughness and the light reflection intensity distribution have a predetermined relationship as shown in "The Scattering of Electromagnetic Waves from Rough Surfaces" under a joint authorship of P. Beckmann and A. Sprizzichino, published by Pergamon Press in 1963.

Further, according to the result of the detailed study made by Yuichiro Asano et al on this relationship, which is published in "TETSU-TO-HAGANE (IRON & STEEL), Vol. 70 (1984), page 1095 and forth, when the scopes of the formulae (1) and (2) of claim 1 are satisfied, the specular reflection intensities I1 and I2 have the relationships shown in the following equations with the parameters of the roughness degree $\sigma$ and T.

$$I1 = f1\,(\sigma) \tag{3}$$
$$I2 = f2\,(\sigma,\ T) \tag{4}$$

where the incident light intensity is a unit intensity and the total reflection factor is 1.

Here, if the total reflection factor is taken into consideration, then the left members of the above-mentioned equations (3) and (4) are replaced by I1/S1, I2/S2 (S1 and S2 are the total reflection intensities under the conditions of the formulae (1) and (2)), respectively, and the information of the parameters of the roughness degree $\sigma$ and T is reliably included in the both data I1/S1 and I2/S2. In consequence, the glossinesses are determined by the both data of I1/S1 and I2/S2, and can be determined quantitatively.

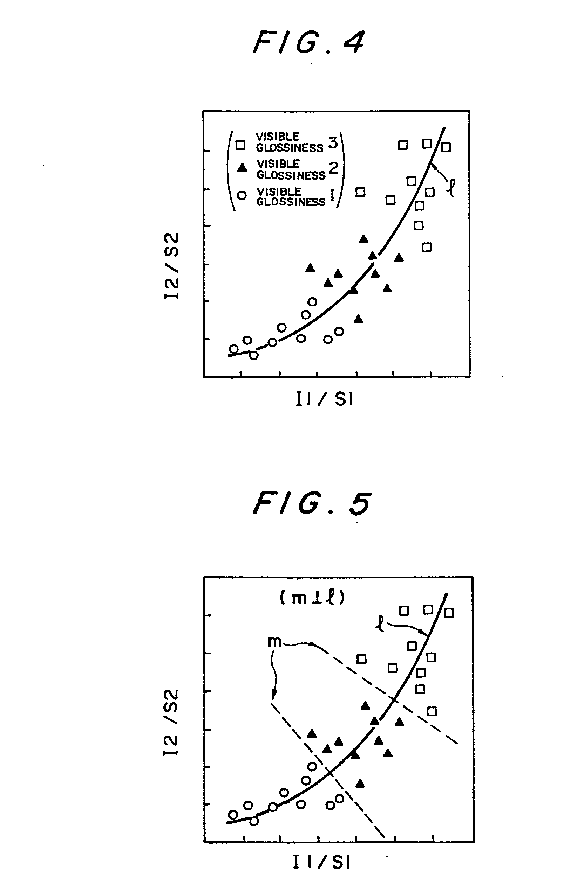

On the other hand, when consideration is given to a multiplicity of samples having the qualities of types identical with one another, but being different in visible glossiness from one another, if these samples are plotted on the two dimensional plane (I1/S1, I2/S2), as shown in Fig. 4 for example, there are many cases where these samples are continuously distributed along the predetermined curve 1 on the two dimensional plane according to the glossinesses thereof. In Fig. 4, designated at o is a sample having the visible glossiness 1, ▲ a sample having the visible glossiness 2 and □ a sample having the visible glossiness 3, respectively.

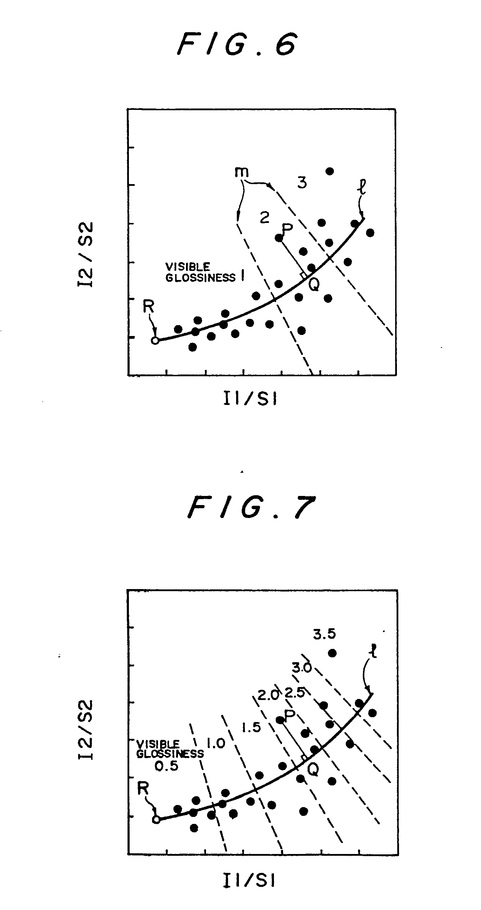

In consequence, when the glossinesses of these samples are classified on the two dimensional plane (I1/S1, I2/S2), the method of classifying the glossinesses by straight lines m normal to the curve 1 is adequate and simple as being the first method shown in Fig. 5.

The inventor of the present invention has thought of the following method as a method, wherein this classification is performed more ordinarily. More specifically, the representative points of the respective visible glossinesses are plotted on the two dimensional plane (I1/S1, I2/S2), the curve 1 obtained by smoothly connecting these points is determined by a construction on a drawing, for example. Subsequently, the glossiness of an arbitrary sample is evaluated by a distance (or a value equivalent thereto) from a reference point R on the curve 1 along the curve 1 to a foot Q of a perpendicularly drawn line from a point P of the sample on the two dimensional plane. Fig. 6 shows the simplest example wherein the sample points are classified in accordance with the visible glossinesses 1, 2 and 3. Fig. 7 shows an example wherein these visible glossinesses are further finely evaluated.

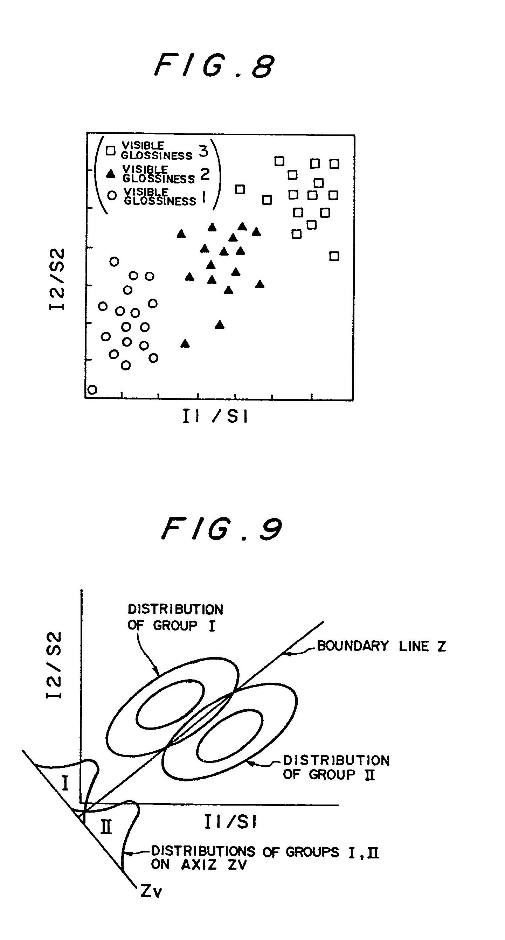

On the other hand, a multiplicity of samples having the qualities of types identical with one another, but being different in visible glossiness from one another are plotted on the two dimensional plane (I1/S1, I2/S2), as shown in Fig. 8 for example, there are also many cases where these samples are distributed on the two dimensional plane, being divided into a plurality of groups in accordance with the glossinesses thereof. In Fig. 8, designated at o is a sample having the visible glossiness 1, ▲ a sample having the visible glossiness 2 and □ a sample having the visible glossiness 3, respectively.

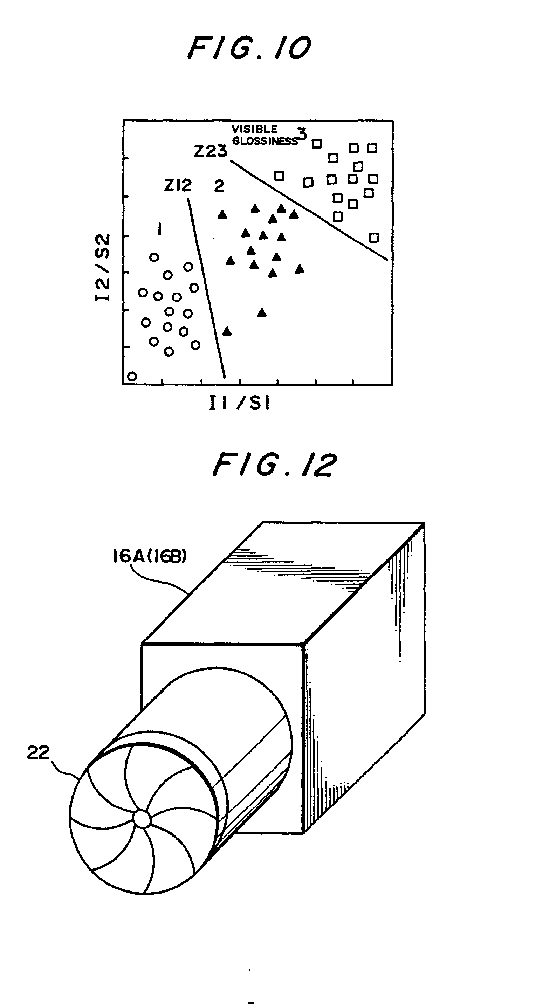

In consequence, when the glossinesses of these samples are divided on the two dimensional plane (I1/S1, I2/S2), as a second method, such a method is adequate that the boundary line Z is determined such that the overlapping between the respective adjoining groups of the glossinesses comes to be statistically the minimum, and the samples are divided. The boundary line Z for making the statistic overlapping between the two adjoining groups be the minimum is derived by use of a discriminant function. As shown in Fig. 9 for example, this boundary line Z can be determined such that, when the two dimensional distributions of the adjoining groups are projected onto an axis Zv normal to the boundary line Z, the overlapping there

3

comes to be minimum. According to this second method, a boundary line Z12 between the glossinesses 1 and 2 and a boundary line Z23 between the glossinesses 2 and 3 of the groups of glossinesses as shown in Fig. 8 are determined, and the divided state is shown in Fig. 10.

For example, the boundary line Z23 between the glossinesses 2 and 3 as shown in an example of Fig. 10 is determined as shown below. More specifically, when data shown in Table 1 are obtained on the respective glossinesses, the following statistics are calculated by the following equations.

$$\overline{Xi^{(1)}} = \sum_{a-1}^{n} X\,ai^{(1)}/n \tag{5}$$

$$\overline{Xi^{(2)}} = \sum_{b-1}^{m} X\,bi^{(2)}/m \tag{6}$$

$$\overline{Xi} = (\overline{Xi^{(1)}} + \overline{Xi^{(2)}})/2 \tag{7}$$

TABLE 1

| CHARACTERISTIC VALUE | | $l_1/S_1$ | $l_2/S_2$ |
|---|---|---|---|
| GLOSSINESS 3 | 1 | $X\,1\,1^{(1)}$ | $X\,1\,2^{(1)}$ |
| | 2 | $X\,2\,1^{(1)}$ | |
| | 3 | $X\,3\,1^{(1)}$ | |
| | a | $X\,a1^{(1)}$ | $X\,a2^{(1)}$ |
| | n | $X\,n1^{(1)}$ | $X\,n2^{(1)}$ |
| | AVERAGE | $\overline{X\,1^{(1)}}$ | $\overline{X\,2^{(1)}}$ |
| GLOSSINESS 2 | 1 | $X\,1\,1^{(2)}$ | $X\,1\,2^{(2)}$ |
| | 2 | $X\,2\,1^{(2)}$ | |
| | 3 | $X\,3\,1^{(2)}$ | |
| | b | $X\,b1^{(2)}$ | $X\,b2^{(2)}$ |
| | m | $X\,m1^{(2)}$ | $X\,m2^{(2)}$ |
| | AVERAGE | $\overline{X\,1^{(2)}}$ | $\overline{X\,2^{(2)}}$ |

$$di = \overline{Xi^{(1)}} - \overline{Xi^{(2)}} \quad (i = 1, 2, \ldots p) \tag{8}$$

$$Sij = \sum_{a-1}^{n} (Xai^{(1)} - \overline{Xi^{(1)}})(Xaj^{(1)} - \overline{Xj^{(1)}})$$

$$+ \sum_{b=1}^{m} (Xbi^{(2)} - \overline{Xi^{(2)}})(Xbj^{(2)} - \overline{Xj^{(2)}})$$

$$(i, j = 1, 2, \ldots p) \tag{9}$$

$$Vij = Sij/(n + m - 2) \tag{10}$$

Here, the equations (5) and (6) have sought mean values, the equation (9) has sought the sum of squares in group and the sum of products and the equation (10) has sought the variance in group and the covariance.

The boundary line Z as being the discriminant function can be determined from the above-mentioned statistics through the following equations.

$$Z = \sum_{i-1}^{p} ai(Xi - \overline{Xi} \tag{11}$$

$$ai = \sum_{i-1}^{p} Vij \cdot dj \tag{12}$$

$$\therefore a = V^{-1} d \tag{13}$$

In the foregoing, the method of determining the discriminant function having two parameters has been explained. According to this method of determining the discriminant function, a discriminant function having more than two parameters can be determined as well.

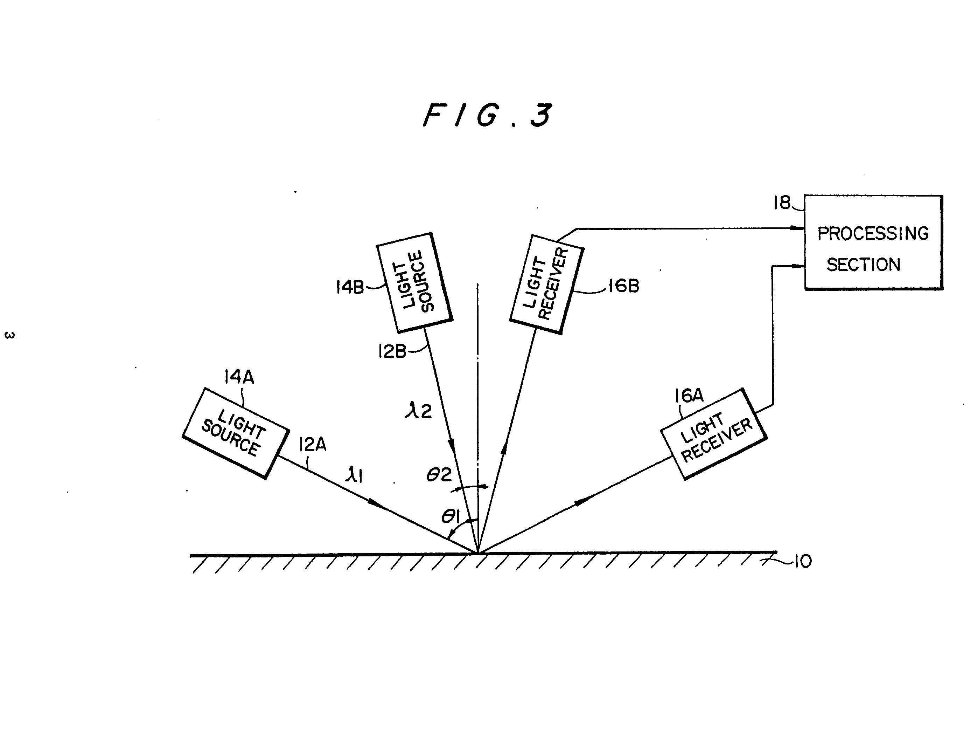

In using the first or the second method, as shown in Fig. 3, the glossinesses of the surface of the work 10 to be measured can be determined in such a manner that the light fluxes 12A and 12B are projected to the surface of the work 10 to be measured from the two light sources 14a and 14B having the wavelengths λ1 and λ2 and the incident angles θ1 and θ2 which satisfy the conditions of the above-mentioned formulae (1) and (2), the specular reflection intensities I1, I2 and the total reflection intensities S1, S2 are detected by the light receivers 16A and 16B, and the specular reflection intensities I1, I2 and the total reflection intensities S1, S2 are adequately processed by the processing section 18 in accordance with the first or the second method.

As the light receiver 16A (16B) for detecting the specular reflection intensity I1 (I2) and the total reflection intensity (S1 (S2), as shown in Fig. 11 for example, use of such a light receiver 16A (16B) may be thought of, that photodiodes 20A, 20B, 20C . . . are arranged in a two dimensional array form, out of these photodiodes, the quantity of detected light of the specific photodiode which is on the specular reflecting direction becomes the specular reflection intensity I1 (I2) and the total sum of the entire light receiving values becomes the total reflection intensity S1 (S2). At this time, the expansion (area) of the two dimensional array of the photodiodes 20A, 20B, 20C . . . should have the expansion (area) sufficient for receiving the total reflection light. Or, as shown in Fig. 12, such a light receiver 16a (16B) may be thought of, that an aperture 22 is provided in front of the light receiver 16A (16B) and the opening area of the aperture 22 is made variable, so that the specular reflection intensities I1 (I2) and the total reflection intensities S1 (S2) can be detected.

The exact nature of this invention, as well as other objects and advantages thereof, will be readily apparent from consideration of the following specification relating to the accompanying drawings, in which like reference characters designate the same or similar parts throughout the figures thereof and wherein:

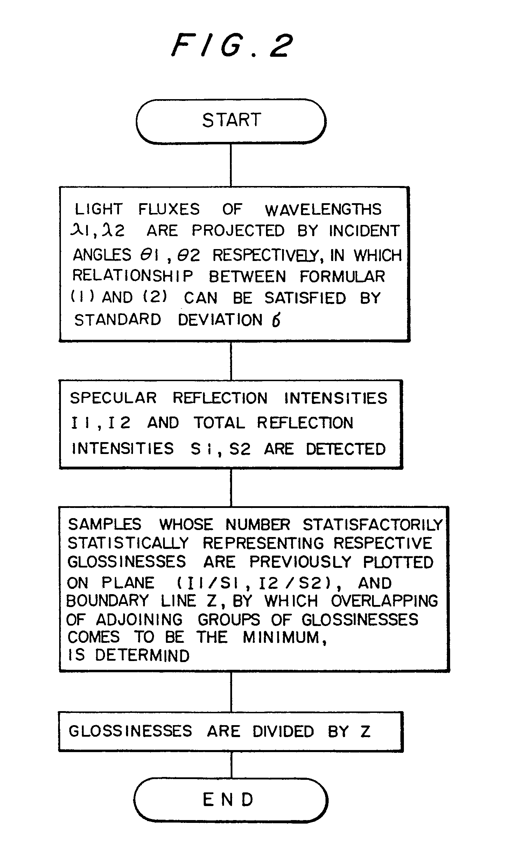

Figs. 1 and 2 are flow charts showing the gists of the methods of determining glossinesses of the surface of a body according to the present invention;

Fig. 3 is a block diagram showing the gist of arrangement of the apparatus for determining the glossinesses of the surface of a body according to the present invention;

Fig. 4 is a chart showing an example of the state of distribution of the samples on the two dimensional plane (I1/S1, I2/S2) in explanation of the principle of the first method according to the present invention;

Fig. 5 is a chart showing an example of the curve 1 and straight lines m on the two dimensional plane (I1/S1, I2/S2) in explanation of the principle of the first method;

Fig. 6 is a chart showing the simplest example wherein the sample points are classified by the first method according to the present invention;

Fig. 7 is a chart showing an example wherein the visible glossinesses are further finely evaluated by the first method according to the present invention;

Fig. 8 is a chart showing an example of the state of distribution of the samples on the two dimensional plane (I1/S1, I2/S2) in explanation of the principle of the second method according to the present invention;

Fig. 9 is a chart showing an example of the method of dividing the groups of glossinesses in explanation of the principle of the second method;

Fig. 10 is a chart showing an example wherein the groups of glossinesses are divided by the second method according to the present invention;

Fig. 11 is a perspective view showing an example of the arrangement of the light receiver used in the method according to the present invention;

Fig. 12 is a perspective view showing another example of the arrangement of the light receiver used in the method according to the present invention;

Fig. 13 is a chart showing the result of determination of a first embodiment, wherein the evaluation of the glossinesses of a stainless steel sheet is made under the application of the first method according to the present invention; and

Fig. 14 is a chart showing the result of determination of a second embodiment, wherein the determination of the glossinesses of a cold-rolled steel sheet is made under the application of the second method according to the present invention.

Detailed description will hereunder be given of the first embodiment wherein the evaluation of the glossinesses of the stainless steel sheet is made by the first method according to the present invention.

This first embodiment is provided to test the performance of the automatic determination for the purpose of replacing the determination of the glossinesses under the conventional visual inspection (four grades of the glossinesses 1 to 4) by the automatic determination through the measurement of the light reflection intensities $I1$ and $I2$.

A parameter $\sigma$ of the surface roughness of the stainless steel sheet, which is treated here, is 0.075 to 0.14 micrometer. If an Ar laser beam of $\lambda = 0.457$ micrometer is utilized as the light flux to be used, then the above-mentioned formula (I) can be satisfied at an incident angle $\theta = 75°$, and the above-mentioned formula (2) can be satisfied at an incident angle $\theta = 10°$. In the case of the stainless steel sheet which is treated here, the total reflection factors are substantially constant, and the two dimensional plane ($I1/S1$, $I2/S2$) used in the evaluation of the glossinesses is equivalent to ($I1$, $I2$).

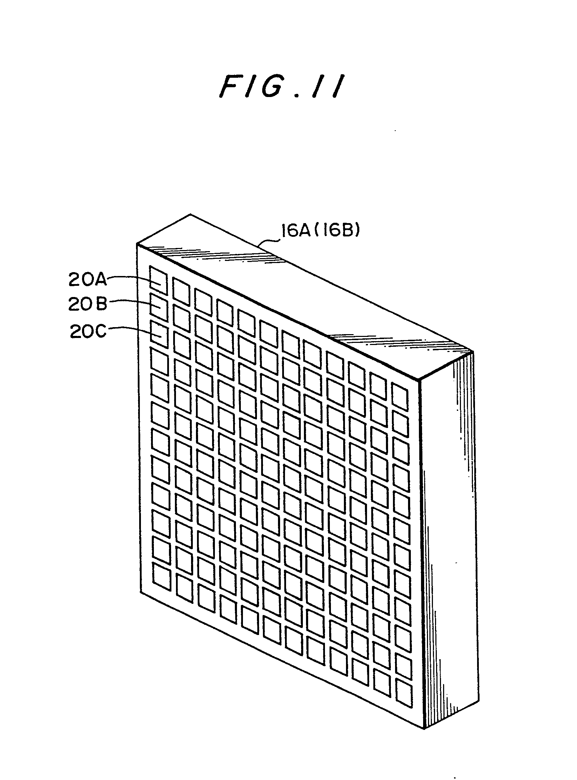

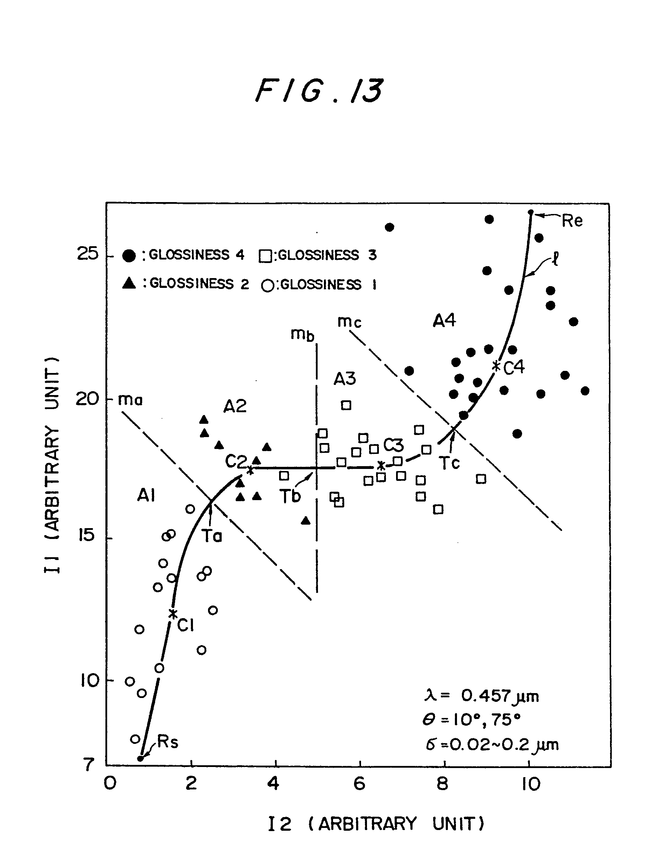

Fig. 13 shows the result of determination by this first embodiment. The respective samples are classified into four grades of the glossinesses 1 to 4 through the visual inspection made by a plurality of skilled inspectors by comparing the samples with the reference samples. In Fig. 13, ○, ▲, □ and ● indicate the samples having the glossinesses 1, 2, 3 and 4, respectively.

On the other hand, with these samples, the specular reflection intensities $I1$ and $I2$ were measured, and, with the samples belonging to the respective glossinesses, representative points (centroid points in this first embodiment) C1 to C4 on the two dimensional plane of ($I1$, $I2$) were determined. Thereafter, these points were smoothly connected to one another on the plane to draw the curve 1. Subsequently, adequate boundary lines ma, mb and mc which perpendicularly intersect the curve 1, respectively, were determined so that the samples can be classified by the respective glossinesses. As the practical method of determining these boundary lines ma, mb and mc, such a method can be adopted that, for example, a multiplicity of sample points are plotted and the boundary lines ma, mb and mc are determined, so that, the number of points turned to be mistakenly determined can be limited to the minimum for the respective adjoining groups.

As the result of automatically determining a multiplicity of stainless steel sheets by the determining method sought through the above-mentioned steps, with the samples of about 97% were accurately determined and the satisfactory performance of the determining method was ascertained.

Additionally, as the method of determining the glossinesses further finely, such a method may be adopted that the glossinesses at the respective representative points C1, C2, C3 and C4 are made to be 1.0, 2.0, 3.0 and 4.0, the glossinesses of reference point Rs, a point of intersection Ta between the curve 1 and the boundary line ma, a point of intersection Tb between the curve 1 and the boundary line mb, a point of intersection Tc between the curve 1 and the boundary line mc, and the reference point Re are made to be 0.5, 1.5, 2.5, 3.5 and 4.5, respectively, and further, the glossinesses of arbitrary points on the curve 1 are to be proportionally interpolated values along the curve 1 in respective sections (0.5 to 1.0, 1.0 to 1.5 . . . 4.0 to 4.5), so that the glossiness of each of the arbitrary samples can be made to be the glossiness of a point at which is positioned the foot Q of a perpendicularly drawn line from the point P associated with the sample on the two dimensional plane of ($I1$, $I2$) to the curve 1.

The determination of glossiness of analogue type can be performed by this method.

Detailed description will hereunder be given of the second embodiment wherein the determination of the glossinesses of the cold-rolled steel sheet is performed by the second method according to the present invention.

This second method is also provided to test the performance of the automatic determination for the purpose of replacing the determination of the glossinesses under the conventional visual inspection (four grades of the glossinesses 1 to 4) by the automatic determination through the measurement of the light reflection intensities $I1$ and $I2$.

The parameter $\sigma$ of the surface roughness of the cold-rolled steel sheet treated here is 0.15 to 0.35 micrometer. When the He—Ne laser beam having a wavelength of $\lambda = 0.633$ micrometer is utilized as the light flux used, the formula (1) can be satisfied by the incident angle $\theta = 75°$ and the formula (2) can be satisfied by the incident angle $\theta = 10°$. Furthermore, in the case of the cold-rolled steel sheet treated here, the total reflection factor is substantially constant, and the two dimensional plane ($I1/S1$, $I2/S2$) used for the evaluation of the glossinesses is equivalent in value to the two dimensional plate ($I1$, $I2$).

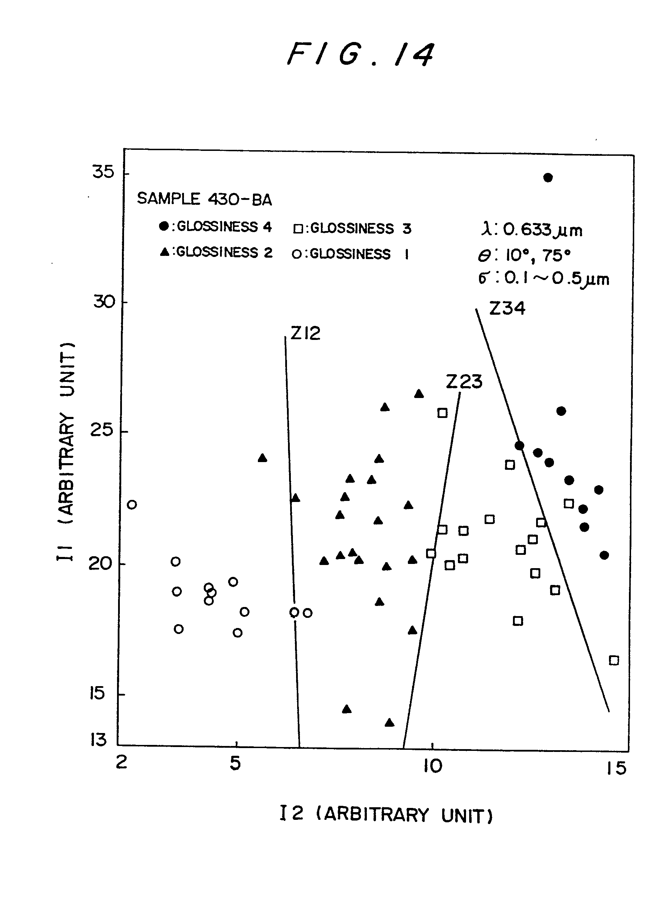

Fig. 14 shows the result of determination by the second embodiment. The respective samples were classified into four grades of the glossinesses 1 to 4 through the visual inspection made by a plurality of skilled inspectors by comparing the samples with the reference samples. In Fig. 14, ○, ▲, □ and ● indicate the samples having the glossinesses 1, 2, 3 and 4, respectively.

On the other hand, with these samples, the specular reflection intensities $I1$ and $I2$ were measured, and, with the samples belonging to the respective glossinesses, boundary lines Z34, Z23 and Z12 as being the discriminant functions were derived between the respective groups of glossinesses on the two

dimensional plane (I1, I2). The boundary lines Z34, Z23 and Z12 thus derived were represented by the following equations:

$$Z34 = 0.0043\,(I2 - 1278) \\ + 0.0029\,(I1 - 2269) \tag{14}$$

$$Z23 = 0.0219\,(I2 - 1017) \\ - 0.0035\,(I1 - 2113) \tag{15}$$

$$Z12 = 0.03\,(I2 - 642) \\ = 0.0007\,(I1 - 2011) \tag{16}$$

The glossinesses of a multiplicity of samples of the cold-rolled steel sheet were determined by use of the boundary lines Z34, Z23 and Z12 thus determined. As a result, the determination of glossinesses of about 90% of the samples was accurately performed, whereby the method was ascertained to have a satisfactory determining capacity.

Additionally, in the above-described embodiments, the present invention has been applied to the evaluation and determination of glossinesses of the stainless steel sheet and the cold-rolled steel sheet, however, the scope of application of the present invention need not necessarily be limited to this, and it is apparent that the present invention is applicable to the determination of glossinesses on the surface of an ordinary body.

**Claims**

1. A method of determining the glossiness grade of a surface of a sample body by directing onto the surface to be measured first and second light fluxes (12A, 12B) at angles of $\theta 1$ and $\theta 2$, respectively, and measuring the specular reflection intensities I1 and I2 of said first and second light fluxes, respectively, and determining said glossiness in terms of glossiness grades being classified in accordance with the light reflection intensity distribution at said surface, characterized by the following steps:

a) directing said light fluxes (12A, 12B) having wavelengths $\lambda_1$ and $\lambda_2$, respectively, on said surface such that the following relations are satisfied:

$$\left(\frac{4\pi\sigma}{\lambda_1}\cos\theta 1\right)^2 \leqslant 1 \tag{1}$$

$$\left(\frac{4\pi\sigma}{\lambda_2}\cos\theta 2\right)^2 \geqslant 4 \tag{2}$$

wherein $\sigma$ is the standard deviation of the height distribution of the roughness profile of the surface to be measured.

b) measuring, in addition to said specular reflection intensities I1 and I2, the total reflection intensities S1 and S2 of said first and second light fluxes (12A, 12B) at said surface,

c) conducting the steps a) and b) on a plurality of reference surfaces having known glossiness grades and plotting the measurement points on a two dimensional plane (I1/S1, I2/S2), each measurement point having a respective glossiness grade associated therewith,

d) smoothly connecting the measurement points to one another to determine a curve I,

e) determining a straight line m perpendicularly intersecting said curve I allowing the separation of two adjoining groups of measurement points, each group being associated with different grades of glossiness, such that from said plotted measurement points the number of points which as a result of said separation are located on the wrong side of said line m is minimized.

f) conducting the steps a) and b) on the surface of the sample body to be measured, plotting the thus obtained measurement point on the two dimensional plane (I1/S1, I2/S2) and determining the glossiness grade of the surface of the sample body by determining on which side of said m line said plotted point of the sample body lies.

2. A method according to claim 1, wherein for each group of measurement points of the reference surfaces having an associated grade of glossiness, a centroid point is selected and all centroid points are smoothly connected to one another to determine the said curve 1.

3. A method according to claim 1, wherein a straight line is drawn on the two dimensional plane (I1/S1, I2/S2) from a measure point P of the sample body to be measured to the curve I intersecting the same in a foot point Q, evaluating the distance from said foot point Q along the curve I to a reference point R on said curve I, whereby the distance evaluated represents the glossiness grade of the surface of the sample body to be measured.

4. A method according to claim 3, wherein the glossiness grade of an arbitrary point Q on said curve I is given as a proportionally interpolated value along said curve I in respective sections between lines m.

5. A method of determining the glossiness grade of a surface of a sample body by directing onto the surface to be measured first and second light fluxes (12A, 12B) at angles of θ1 and θ2, respectively, and measuring the specular reflection intensities I1 and I2 of said first and second light fluxes, respectively, and determining said glossiness in terms of glossiness grades being classified in accordance with the light reflection intensity distribution at said surface, characterized by the following steps:

a) directing said light fluxes (12A, 12B) having wavelengths $\lambda_1$ and $\lambda_2$, respectively, on said surface such that the following relations are satisfied:

$$(\frac{4\pi\sigma}{\lambda_1} \cos\theta 1)^2 \leqslant 1 \tag{1}$$

$$(\frac{4\pi\sigma}{\lambda_2} \cos\theta 2)^2 \geqslant 4 \tag{2}$$

wherein σ is the standard deviation of the height distribution of the roughness profile of the surface to be measured,

b) measuring, in addition to said specular reflection intensities I1 and I2, the total reflection intensities S1 and S2 of said first and second light fluxes (12A, 12B) at said surface,

c) conducting the steps a) and b) on a plurality of reference surfaces having known glossiness grades and plotting the measurement points on a two dimensional plane (I1/S1, I2/S2), each measurement point having a respective glossiness grade associated therewith,

d) determining one or more glossiness boundary lines Z derived by using a discriminant function such that the overlapping between adjoining groups of reference surfaces points associated with different grades of glossiness comes to be statistically the minimum.

e) conducting the steps a) and b) on the surface of the sample body to be measured plotting the thus obtained measurement point on the two dimensional plane (I1/S1, I2/S2) and determining the glossiness grade of the surface of the sample body by determining where said point is located with respect to said one or more boundaries Z.

6. A method according to claim 5, wherein said boundary line Z is determined such that when two dimensional distributions of said adjoining groups are projected on an axis Zv normal to said boundary line Z, the overlapping formed there comes to be the minimum.

**Patentansprüche**

1. Ein Verfahren zur Bestimmung des Glättergrades einer Oberfläche eines Probekörpers durch Richten erster und zweiter Lichtströme (12A, 12B) jeweils unter Winkeln θ1 und θ2 auf die zu messenden Oberfläche, und Messen der Spiegelreflexionsintensitäten I1 und I2 jeweils der ersten und zweiten Lichtströme, und Bestimmen der Glätte in Form von Glättegraden, die entsprechend der Lichtreflexionsintensitätsverteilung auf der Oberfläche klassifiziert werden, gekennzeichnet durch die folgenden Verfahrensschritte:

a) Richten der Lichtströme (12A, 12B) mit jeweiligen Wellenlängen λ1 und λ2 auf die Oberfläche, so daß die folgenden Beziehungen

$$(\frac{4\pi\sigma}{\lambda_1} \cos 01)^2 \leqslant 1 \tag{1}$$

$$(\frac{4\pi\sigma}{\lambda_2} \cos 02)^2 \geqslant 4 \tag{2}$$

erfüllt sind, worin σ die Standardabweichung der Höhenverteilung des Glätterprofils der zu messenden Oberfläche ist.

b) Messen, zusätzlich zu den Spiegelreflexionsintensitäten I1 und I2, der Totalreflexionsintensitäten S1 und S2 der ersten und zweiten Lichtstrahlen (12A, 12B) auf der Oberfläche,

c) Ausführen der Schritte a) und b) auf einer Vielzahl von Referenzoberflächen, die bekannte Glättegrade aufweisen, und Aufzeichnen der Meßpunkte auf einer zweidimensionalen Ebene (I1/S1, I2/S2), wobei jeder Meßpunkt mit einem jeweiligen ihm zugeordneten Glättegrad verknüpft ist,

d) Verbinden der Meßpunkte glatt miteinander, um eine Kurve I zu bestimmen,

e) Bestimmen einer geraden Linie m, die die Kurve I senkrecht schneidet, was die Abtrennung von t benachbarten Gruppen von Meßpunkten ermöglicht, wobei jede Gruppe mit unterschiedlichen Glättegraden verknüpft ist, so daß von den aufgezeichneten Meßpunkten die Anzahl der Punkte, die im Ergebnis der Trennung auf der falschen Seite der Linie m angeordnet sind, minimiert ist,

f) Ausführen der Schritte a) und b) auf der zu messenden Oberfläche des Probekörpers, Aufzeichnen der so erhaltenen Meßpunkte auf der zweidimensionalen Ebene (I1/S1, I2/S2) und Bestimmen des Glättegrades der Oberfläche des Probekörpers durch Feststellen, auf welcher Seite der Linie m der aufgezeichnete Punkt des Probekörpers liegt.

# EP 0 183 270 B1

2. Verfahren nach Anspruch 1, wobei für jede Gruppe von Meßpunkten der Referenzoberflächen, der ein zugehöriger Glättegrad zugeordnet ist, ein Schwerpunkt ausgewählt wird und alle Schwerpunkte glatt miteinander verbunden werden, um die Kurve I zu bestimmen.

3. Verfahren nach Anspruch 1, wobei eine gerade Linie auf der zweidimensionalen Ebene (I1/S1, I2/S2) von einem Meßpunkt P des zu messenden Probekörpers zu der Linie I gezogen wird, die dieselbe in einem Fußpunkt Q schneidet, und der Abstand von dem Fußpunkt Q längs der Kurve I zu einem Referenzpunkt R auf der Kurve I bestimmt wird, wobei der ermittelte Abstand den Glättegrad der zu messenden Oberfläche des Probekörpers repräsentiert.

4. Verfahren nach Anspruch 3, wobei der Glättegrad an einem beliebigen Punkt Q auf der Kurve I als ein längs der Kurve I in jeweiligen Abschnitten zwischen den Linien m proportional interpolierter Wert gegeben ist.

5. Ein Verfahren zur Bestimmung des Glättegrades einer Oberfläche eines Probekörpers durch Richten erster und zweiter Lichtströme (12A, 12B) unter jeweiligen Winkeln $\theta1$ und $\theta2$ auf die zu messende Oberfläche, und Messen der Spiegelreflexionsintensitäten I1 und L2 jeweils der ersten und zweiten Lichtströme, und Bestimmen der Glätte in Form von Glättegraden, die entsprechend der Lichtreflexionsintensitätsverteilung auf der Oberfläche klassifiziert werden, gekennzeichnet durch die folgenden Verfahrensschritte:

a) Richten der Lichtströme (12A, 12B) mit jeweiligen Wellenlängen $\lambda_1$ und $\lambda_2$ auf die Oberfläche, so daß die folgenden Beziehungen

$$\left(\frac{4\pi\sigma}{\lambda_1}\cos\theta1\right)^2 \leqslant 1 \tag{1}$$

$$\left(\frac{4\pi\sigma}{\lambda_2}\cos\theta2\right)^2 \geqslant 4 \tag{2}$$

erfüllt sind, worin $\sigma$ die Standardabweichung der Höhenverteilung des Glätteprofils der zu messenden Oberfläche ist,

b) Messen, zusätzlich zu den Spiegelreflexionsintensitäten I1 und I2, der Totalreflexionsintensitäten S1 und S2 der ersten und zweiten Lichtstrahlen (12A, 12B) auf der Oberfläche,

c) Ausführen der Schritte a) und b) auf einer Vielzahl von Referenzoberflächen, die bekannte Glättegrade aufweisen, und Aufzeichnen der Meßpunkte auf einer zweidimensionalen Ebene (I1/S1, I2/S2), wobei jeder Meßpunkt mit einem jeweiligen ihm zugeordneten Glättegrad verknüpft ist,

d) Bestimmen von einer oder mehreren Glättegrenzlinien Z, die durch Verwendung einer Diskriminantenfunktion abgeleitet derart werden, daß die überlappung zwischen benachbarten Gruppen von Referenzoberflächenpunkten, die mit unterschiedlichen Glättegraden verbunden sind, statistisch das Minimum wird,

e) Ausführen der Schritte a) und b) auf der zu messenden Oberfläche des Probekörpers, Aufzeichnen der so erhaltenen Meßpunkte auf der zweidimensionalen Ebene (I1/S1, I2/S2) und Bestimmen des Glättegrades der Oberfläche des Probekörpers durch Bestimmung, wo der Punkt in Bezug auf die eine Grenzlinie Z oder mehreren Grenzlinien Z angeordnet ist.

6. Verfahren nach Anspruch 5, wobei die Grenzlinie Z derart bestimmt wird, daß, wenn zweidimensionale Verteilungen der benachbarten Gruppen auf eine Achse Zv, die senkrecht zu oder Grenzlinie Z steht, projiziert werden, die dort gebildetete überlappung das Minimum wird.

**Revendications**

1. Procédé pour la détermination du degré de brillance d'une surface d'un corps d'échantillon en dirigeant sur la surface à mesurer des premier et deuxième flux lumineux (12A, 12B) respectivement selon des angles $\theta1$ et $\theta2$, et en mesurant les intensités de réflexion spéculaire I1 et I2 des premier et deuxième flux lumineux, respectivement, et en déterminant la brillance exprimée en degrés de brillance classés selon la répartition de l'intensité lumineuse de réflexion sur la surface, caractérisé par les étapes suivantes consistant à:

a) diriger les flux lumineux (12A, 12B) ayant respectivement les longueurs d'onde $\lambda_1$ et $\lambda_2$ sur la surface de sorte que les relations suivantes soient satisfaites:

$$\left(\frac{4\pi\sigma}{\lambda_1}\cos\theta1\right)^2 \leqslant 1 \tag{1}$$

$$\left(\frac{4\pi\sigma}{\lambda_2}\cos\theta2\right)^2 \geqslant 4 \tag{2}$$

où σ est la déviation standard de la répartition de hauteur du profil de rugosité de la surface à mesurer,

b) mesurer, en plus des intensités de réflexion spéculaire I1 et I2, les intensités de réflexion totales S1 et S2 des premier et deuxième flux lumineux (12A, 12B) sur la surface,

c) exécuter les étapes a) et b) sur un ensemble de surfaces de référence ayant des degrés de brillance connus et tracer les points de mesure sur un plan bidimensionnel (I1/S1, I2/S2), chaque point de mesure comportant un degré de brillance respectif qui lui est associé,

d) relier régulièrement les points de mesure entre eux pour déterminer une courbe l,

e) déterminer une ligne droite m coupant perpendiculairement la courbe l en permettant la séparation des groupes contigus de points de mesure, chaque groupe étant associé à différents degrés de brillance, de sorte que, à partir des points de mesure tracés, le nombre de points qui, à la suite de la séparation, sont placés du mauvais côté de la ligne m est réduit au minimum,

f) exécuter les étapes a) et b) sur la surface du corps d'échantillon à mesurer, tracer le point de mesure ainsi obtenu sur le plan bidimensionnel (I1/S1, I2/S2) et déterminer le degré de brillance de la surface du corps d'échantillon en déterminant de quel côté de la ligne m se trouve le point tracé du corps d'échantillon.

2. Procédé selon la revendication 1, dans lequel pour chaque groupe de points de mesure des surfaces de référence comportant un degré de brillance associé, un point de centre de gravité est sélectionné et tous les points de centre de gravité sont reliés régulièrement entre eux pour déterminer la courbe l.

3. Procédé selon la revendication 1, dans lequel une ligne droite est tracée sur le plan bidimensionnel (I1/S1, I2/S2) à partir d'un point de mesure P du corps d'échantillon à mesurer jusqu'à la courbe l la coupant en un point en bas Q, évaluer la distance du point en bas Q le long de la courbe l à un point de référence R sur la courbe l, la distance évaluée représentant ainsi le degré de brillance de la surface du corps d'échantillon à mesurer.

4. Procédé selon la revendication 3, dans lequel le degré de brillance d'un point arbitraire Q sur la courbe l est donné comme une valeur d'interpolation proportionnelle le long de la courbe l dans des sections respectives entre des lignes m.

5. Procédé pour la détermination du degré de brillance d'une surface d'une corps d'échantillon en dirigeant sur la surface à mesurer des premier et deuxième flux lumineux (12A, 12B) respectivement selon des angles θ1 et θ2, et en mesurant les intensités de réflexion spéculaire I1 et I2 respectivement des premier et deuxième flux lumineux, et en déterminant la brillance exprimée en degré de brillance classés selon la répartition d'intensité lumineuse de réflexion sur la surface, caractérisé par les opérations suivantes consistant à:

a) diriger les flux lumineux (12A, 12B) ayant respectivement les longueurs d'onde $\lambda_1$ et $\lambda_2$ sur la surface de sorte que les relations suivantes sont satisfaites:

$$\left(\frac{4\pi\sigma}{\lambda_1}\cos 01\right)^2 \leqslant 1 \tag{1}$$

$$\left(\frac{4\pi\sigma}{\lambda_2}\cos 02\right)^2 \geqslant 4 \tag{2}$$

où σ est la déviation standard de la répartition de hauteur du profil de rugosité de la surface à mesurer,

b) mesurer, en plus des intensités de réflexion spéculaire I1 et I2, les intensités totales de réflexion S1 et S2 des premier et deuxième flux lumineux (12A, 12B) sur la surface,

c) exécuter les étapes a) et b) sur un ensemble de surfaces de référence ayant des degrés de brillance connus et tracer les points de mesure sur un plan bidimensionnel (I1/S1, I2/S2), chaque point de mesure comportant un degré de brillance respectif qui lui est associé,

d) déterminer une ou plusieurs lignes limites de brillance Z dérivées en mettant en oeuvre une fonction de discrimination telle que le recouvrement entre des groupes contigus de points de surfaces de référence associés aux différents degrés de brillance parvient statistiquement au minimum,

e) exécuter les étapes a) et b) sur la surface du corps d'échantillon à mesurer en traçant le point de mesure ainsi obtenu sur le plan bidimensionnel (I1/S1, I2/S2) et déterminer le degré de brillance de la surface du corps d'échantillon en déterminant où est placé le point par rapport à la ou aux limites Z.

6. Procédé selon la revendication 5, dans lequel la ligne limite Z est déterminée de telle sorte que, lorsque des répartitions bidimensionnelles des groupes contigus sont projetées sur un axe Zv normal à la ligne limite Z, le recouvrement qui y est formé parvient au minimum.

EP 0 183 270 B1

## START

**FIG. 1**

LIGHT FLUXES OF WAVE-
LENGTHS $\lambda 1, \lambda 2$ ARE PROJ-
ECTED BY INCIDENT ANGLES
$\theta 1, \theta 2$ RESPECTIVELY, IN
WHICH RELATIONSHIP BE-
TWEEN FORMULAR (1) AND
(2) CAN BE SATISFIED BY
STANDARD DEVIATION $\delta$

SPECULAR REFLECTION IN-
TENSITIES $I1, I2$ AND
TOTAL REFLECTION INTEN-
SITIES $S1, S2$ ARE DETECTED

REPRESENTATIVE POINTS OF
VISIBLE GLOSSINESSES
ARE PREVIOUSLY PLOTTED
ON PLANE ($I1/S1, I2/S2$)
AND THESE POINTS ARE
SMOOTHLY CONNECTED TO
ONE ANOTHER TO DETERMINE
CURVE $\ell$

GLOSSINESSES ARE DIVIDED
BY STRAIGHT LINES m PER-
PENDICULARLY INTERSECTING
CURVE $\ell$

GLOSSINESS IS EVALUATED
BY A DISTANCE FROM
REFERENCE POINT R ON
CURVE $\ell$ TO FOOT Q OF
PERPENDICULARLY DRAWN
LINE FROM P ON PLANE TO
CURVE $\ell$

## END

1

# FIG. 2

START

LIGHT FLUXES OF WAVELENGTHS
$\lambda_1, \lambda_2$ ARE PROJECTED BY INCIDENT
ANGLES $\theta_1, \theta_2$ RESPECTIVELY, IN WHICH
RELATIONSHIP BETWEEN FORMULAR
(1) AND (2) CAN BE SATISFIED BY
STANDARD DEVIATION $\delta$

SPECULAR REFLECTION INTENSITIES
$I_1, I_2$ AND TOTAL REFLECTION
INTENSITIES $S_1, S_2$ ARE DETECTED

SAMPLES WHOSE NUMBER STATISFACTORILY
STATISTICALLY REPRESENTING RESPECTIVE
GLOSSINESSES ARE PREVIOUSLY PLOTTED
ON PLANE $(I_1/S_1, I_2/S_2)$, AND
BOUNDARY LINE Z, BY WHICH OVERLAPPING
OF ADJOINING GROUPS OF GLOSSINESSES
COMES TO BE THE MINIMUM,
IS DETERMIND

GLOSSINESSES ARE DIVIDED BY Z

END

2

# FIG. 3

## FIG.4

## FIG.5

## F I G . 6

## F I G . 7

## F I G . 8

## F I G . 9

# FIG. 10

# FIG. 12

# FIG. 11

# FIG.13

# F I G . 14